# EUROPEAN PATENT SPECIFICATION

(11) **EP 2 657 096 B1**
(45) Date of publication and mention of the grant of the patent: **24.07.2019**
(21) Application number: 10851910.9
(22) Date of filing: 24.12.2010
(51) Int. Cl.: B60W 10/06, B60K 6/48, B60K 6/54, B60W 20/00, F02D 29/02, F02D 13/02

(54) **HYBRID VEHICLE**
HYBRIDFAHRZEUG
VÉHICULE HYBRIDE

(43) Date of publication of application: 30.10.2013
(73) Proprietor: TOYOTA JIDOSHA KABUSHIKI KAISHA, Toyota-shi, Aichi-ken, 471-8571 (JP)
(72) Inventor: MURAKAMI, Koji, Toyota-shi, Aichi-ken, 471-8571 (JP)
(74) Representative: Intès, Didier Gérard André
(86) International application number: PCT/JP2010/073447
(87) International publication number: WO 2012/086088

(56) References cited:
- JP-A- 2003 227 368
- JP-A- 2006 193 139
- JP-A- 2009 137 405
- JP-A- 2009 137 405
- US-A1- 2003 004 635
- US-A1- 2007 284 937

## Description

### Field

The present invention relates to a hybrid vehicle.

### Background

In recent vehicles, so-called hybrid vehicles have been increased which use a motor in addition to an engine that is an internal combustion engine as a power source for the purpose of improving a fuel consumption and the like. In the hybrid vehicles, there exist various modes depending on a configuration of a drive system and a drive control method, and some of the hybrid vehicles are vehicles that travel only by a power generated by a motor when stopping an engine. In contrast, in brake devices used by a vehicle, many brake devices, which generate a brake force by converting a depression force of a driver to a hydraulic pressure and transmit the hydraulic pressure to a brake means, are used. Further, in the brake devices, brake devices, which are provided with a brake booster device that increases a depression force of a driver transmitted to a hydraulic oil making use of a negative pressure generated by sucking air when an engine is operated, are increasing.

However, in the hybrid vehicle, when an engine is stopped while the vehicle travels, since a negative pressure cannot be generated by the engine, when a brake operation is repeated, there may be a case that a booster negative pressure which is a negative pressure used by a brake booster device becomes insufficient and a depression force of a driver cannot be increased by the brake booster device. Accordingly, some of the conventional hybrid vehicles execute control for securing a negative pressure when engine stops.

For example, in a hybrid vehicle described in JP 2009 137405 A, when a booster negative pressure becomes lower than a predetermined value while the vehicle travels only by a power generated by a motor by stopping an engine, an engine revolution number is increased by placing a clutch positioned between drive wheels and the engine or between the motor and the engine in an engaged state or in a semi-engaged state. With the operation, a brake force to a depression force of a driver is secured by generating a negative pressure and securing a booster negative pressure used by a brake booster device.

US 2007/284937 A1 discloses a brake system for a hybrid motor vehicle, which has a combustion engine driven by an electric motor to temporarily function as vacuum pump.

### Summary

### Technical Problem

However, when a booster negative pressure is increased by increasing an engine revolution number because the booster negative pressure is lowered at the time a driver executes a brake operation, there is a case that the driver feels a discomfort because an action when a depression force is increased by changing of booster negative pressure is transmitted to the driver via a brake pedal.

An object of the present invention, which was made in view of the above-mentioned, is to provide a hybrid vehicle capable of securing a fuel consumption performance and a brake performance without causing a driver to feel a discomfort.

### Solution to Problem

In order to solve the above mentioned problem and achieve the object, a hybrid vehicle according to the present invention includes an internal combustion engine and a motor which are power sources when the vehicle travels; and a brake booster device that increases an operation force when a brake pedal is operated making use of a negative pressure generated when the internal combustion engine is operated, wherein when a booster pressure which is the negative pressure used by the brake booster device is higher than a first determination value which is a predetermined determination value while the vehicle travels only by a power generated by the motor, a negative pressure generation control which is a control for generating the negative pressure is executed by operating the internal combustion engine by the power generated by the motor, and when the negative pressure generation control is executed, when the booster pressure is lower than a second determination value which is a determination value higher than the first determination value, the internal combustion engine is operated only when the brake pedal is not depressed, and when the booster pressure is equal to or higher than the second determination value, the internal combustion engine is operated when the brake pedal is not depressed and when the brake pedal in the depressed state is returned.

Further, in the hybrid vehicle, it is preferable that a clutch, which can switch transmission and shut-off of a rotation torque between the internal combustion engine and drive wheels of the vehicle by switching engagement and release, is disposed in a power transmission passage between the drive wheels and the internal combustion engine, when the vehicle is caused to travel only by a power generated by the motor, the internal combustion engine is stopped as well as the clutch is released, and when the internal combustion engine is operated when the negative pressure generation control is executed, a power generated by the motor is transmitted to the internal combustion engine by engaging the clutch.

Further, in the hybrid vehicle, it is preferable that the motor is disposed on a side nearer to the drive wheels side in the power transmission passage than the internal combustion engine, and the clutch is interposed between the motor and the internal combustion engine and disposed so as to be able to switch transmission and shut-off of a rotation torque between the motor and the internal combustion engine.

Further, in the hybrid vehicle, it is preferable that when the internal combustion engine is operated by the power generated by the motor when the negative pressure generation control is executed, the power generated by the motor is compensated.

### Advantageous Effects of Invention

In the hybrid vehicle according to the present invention, when a booster pressure is higher than a first determination value at the time the hybrid vehicle travels only by a power generated by a motor, since a negative pressure generation control is executed, a fuel consumption performance and a brake performance can be achieved at the same time. Further, at the time of the negative pressure generation control, when the booster pressure is lower than a second determination value, since the internal combustion engine is operated only when the brake pedal is not depressed, it can be suppressed that a change of the booster pressure is transmitted to the driver. Further, at the time of the negative pressure generation control, when the booster pressure is equal to or more than the second determination value, since the internal combustion engine is operated when the brake pedal is not depressed and when brake pedal is returned, the booster pressure is secured promptly. With these operations, there can be achieved an effect that the fuel consumption performance and the brake performance can be secured without causing the driver to feel a discomfort.

### Brief Description of Drawings

FIG. 1 is a schematic view illustrating a configuration of a drive system of a hybrid vehicle according to an embodiment.
FIG. 2 is a configuration view of a main portion of the vehicle illustrated in FIG. 1.
FIG. 3 is a flowchart illustrating an outline of a processing procedure of the negative pressure generation control.
FIG. 4 is a flowchart illustrating a processing procedure of a feeling-emphasizing control routine.
FIG. 5 is a time chart illustrating changes of respective control target sections when the negative pressure generation control is executed.
FIG. 6 is a flowchart illustrating a processing procedure of a negative-pressure generation-emphasizing control routine.

### Description of Embodiments

An embodiment of a hybrid vehicle according to the present invention will be explained below in detail based on the drawings. Note that the present invention is not limited by the embodiment. Further, components in the embodiment include components which can be replaced by a person skilled in the art as well as is easy or include substantially the same components.

### Embodiment

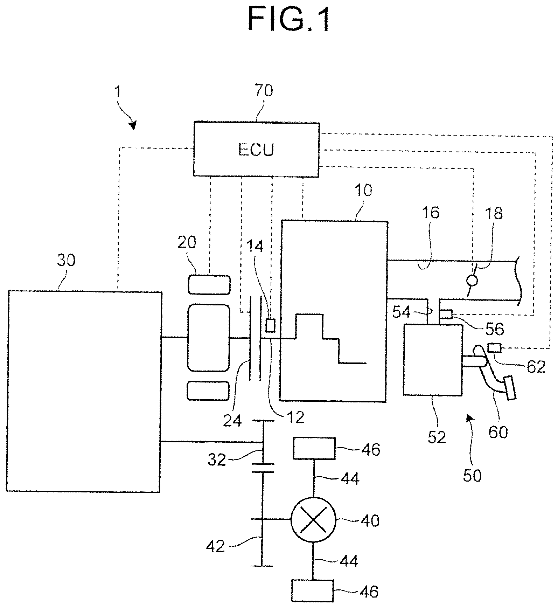

FIG. 1 is a schematic view illustrating a configuration of a drive system of a hybrid vehicle according to an embodiment. A vehicle 1 illustrated in the view includes an engine 10 that is an internal combustion engine as a power source when the vehicle 1 travels and a motor 20 that is an electric motor disposed as a power source when the vehicle 1 travels likewise. The engine 10 is connected to the motor 20 via a clutch 24 which can switch transmission and shut-off of rotation torque between the engine 10 and the motor 20 by switching engagement and release. That is, in the engine 10, an output shaft 12 is connected to the motor 20 via the clutch 24. The clutch 24 is disposed so as to be able to automatically switch the engagement and the release by an actuator (illustration omitted), for example, a solenoid and the like regardless of a driver's intention and further can optionally adjust a transmission rate of torque by optionally adjusting an engaging force. Further, the engine 10 is disposed with an engine revolution number sensor 14 for detecting an engine revolution number by detecting a revolution number of the output shaft 12. Further, the engine 10 includes a so-called variable valve timing mechanism (illustration omitted) which can change an opening/closing timing of an intake valve (illustration omitted) and an exhaust valve (illustration omitted).

Further, an end of the motor 20 on an opposite side of an end connected to the clutch 24 in a rotation shaft is connected to a transmission 30. The transmission 30 is disposed as an automatic transmission for automatically changing revolution numbers of powers generated by the engine 10 and the motor 20 in response to a travel state of the vehicle 1 and to a driving operation of the driver and outputting the revolution numbers to drive wheels 46 side. Further, in the transmission 30, a rotation shaft on an output side, that is, the rotation shaft on the drive wheels 46 side is connected with a final drive gear 32, and the final drive gear 32 is meshed with a ring gear 42 provided with a differential device 40. As described above, the differential device 40 including the ring gear 42 is further connected with a drive shaft 44 coupled with the right and left drive wheels 46, and powers generated in the engine 10 and the motor 20 and transmitted to the differential device 40 can be transmitted to the drive wheels 46 via the drive shaft 44.

A passage, which is formed of equipment, components, and the like such as the transmission 30, the differential device 40, and the like disposed from the engine 10 to the drive wheels 46 and transmits the power generated by the engine 10 and the power generated by the motor 20 to the drive wheels 46, is disposed as a power transmission passage. The motor 20 is disposed on a side nearer to the drive wheels 46 side than the engine 10 in the power transmission passage disposed as described above. Further, the clutch 24 is disposed also in the power transmission passage interposed between the engine 10 and the drive wheels 46 likewise so that the clutch 24 can switch transmission and shut off of rotation torque between the engine 10 and the drive wheels 46.

Further, although the vehicle 1 is disposed with a brake device 50 for generating a brake force when the vehicle 1 travels, the brake device 50 has a brake booster device 52 for increasing an operation force when a brake pedal 60 to be operated by the driver is operated making use of a negative pressure generated when the engine 10 is operated. The brake booster device 52 is connected between a connecting portion to the engine 10 in an intake passage 16 which is connected to the engine 10 and a throttle valve 18 for opening and closing of the intake passage 16 via a negative pressure passage 54. Further, the negative pressure passage 54 is disposed with a booster pressure sensor 56 for detecting a booster pressure that is a negative pressure which can be used by the brake booster device 52. For details, the negative pressure passage 54 is disposed with a negative pressure tank (illustration omitted) for storing the negative pressure which can be used by the brake booster device 52, and the brake booster device 52 can use the negative pressure in the negative pressure tank as the booster pressure. The booster pressure sensor 56 is disposed to the negative pressure tank. Further, a brake pedal sensor 62 which can detect an operation amount of the brake pedal 60 is disposed in the vicinity of the brake pedal 60.

The engine 10 and the like disposed as described above are mounted on the vehicle 1 as well as are connected to an ECU (Electronic Control Unit) 70 for controlling respective sections of the vehicle 1. That is, the devices such as the engine 10, the throttle valve 18, the motor 20, the clutch 24, the transmission 30, and the like are connected to the ECU 70 and disposed so as to be able to be controlled by the ECU 70. Further, the detection means such as the engine revolution number sensor 14, the booster pressure sensor 56, the brake pedal sensor 62, and the like are connected to the ECU 70 and disposed so as to be able to detect a travel state of the vehicle 1 and a driving operation state of the driver and able to be transmitted to the ECU 70.

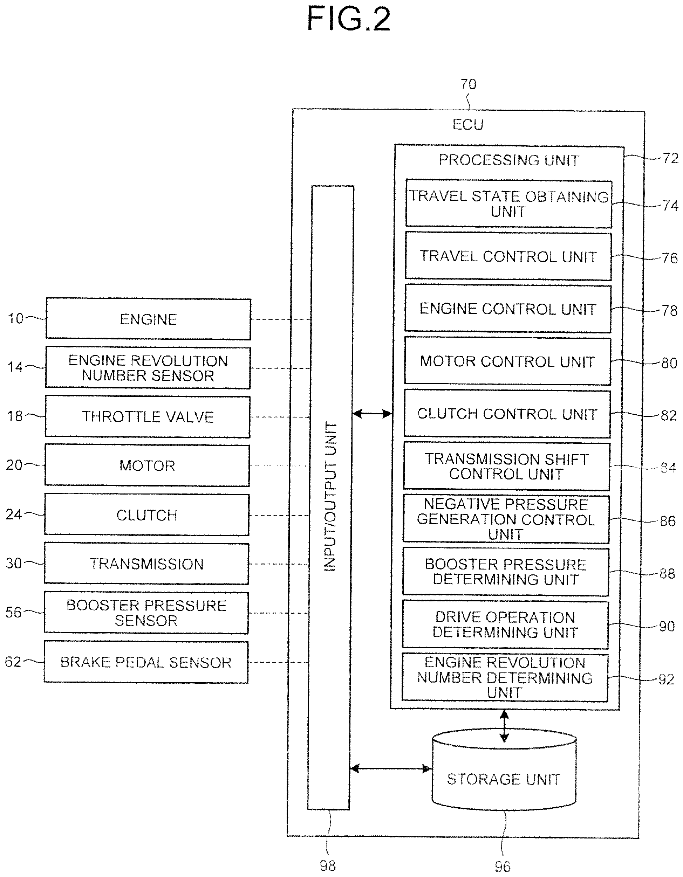

FIG. 2 is a configuration view of a main portion of the vehicle illustrated in FIG. 1. The ECU 70 is disposed with a processing unit 72 having a CPU (Central Processing Unit) and the like, a storage unit 96 such as RAM (Random Access Memory) and the like and further an input/output unit 98 which are connected to each other so as to be able to deliver signals to each other. Further, the respective devices such as the engine 10, the throttle valve 18, the motor 20, the clutch 24, the transmission 30 and the like connected to the ECU 70 and further the sensors such as the engine revolution number sensor 14, the booster pressure sensor 56, the brake pedal sensor 62, and the like connected to the ECU 70 are connected to the input/output unit 98, and the input/output unit 98 inputs and outputs signals between them and the engine 10 and the like. Further, the storage unit 96 is stored with a computer program for controlling the vehicle 1.

Further, the processing unit 72 of the ECU 70 disposed as described above includes a travel state obtaining unit 74 for obtaining the travel state of the vehicle 1 and the driving operation state of the driver, a travel control unit 76 for integrally executing a control of plural devices when the vehicle 1 travels, an engine control unit 78 for executing an operation control of the engine 10, a motor control unit 80 for executing an operation control of the motor 20, a clutch control unit 82 for controlling an engaging state of the clutch 24, a transmission shift control unit 84 for executing a transmission shift control of the transmission 30, a negative pressure generation control unit 86 for executing a negative pressure generation control for generating a negative pressure when a negative pressure capable of being used by the brake booster device 52 is low, a booster pressure determining unit 88 for executing respective determinations when the negative pressure generation control is executed based on a booster pressure that is the negative pressure capable of being used by the brake booster device 52, a drive operation determining unit 90 for executing a determination of the driving operation state of the driver when the negative pressure generation control is executed, and an engine revolution number determining unit 92 for executing a determination of an engine revolution number when the negative pressure generation control is executed.

When a control of the vehicle 1 is executed by the ECU 70, the processing unit 72 reads the computer program to memory assembled to the processing unit 72 and executes a calculation based on a result of detection of, for example, the engine revolution number sensor 14 and the like and controls the vehicle 1 by operating the throttle valve 18 and the like in response to a result of the calculation. At the time, the processing unit 72 appropriately stores a numerical value while the calculation is being executed in the storage unit 96 and further executes a calculation by fetching the stored numerical value.

The hybrid vehicle according to the embodiment is configured as described above, and an operation of the hybrid vehicle will be explained below. When the vehicle 1 travels, the travel state of the vehicle 1 such as an engine revolution number and the like and the driving operation state by the driver such as an operation amount of an accelerator pedal (illustration omitted) and the like are detected by the detection means such as the engine revolution number sensor 14 and the like, and a result of the detection is obtained by the travel state obtaining unit 74 provided with the processing unit 72 of the ECU 70. The travel state of the vehicle 1 and the like obtained by the travel state obtaining unit 74 are transmitted to the travel control unit 76 provided with the processing unit 72 of the ECU 70.

The travel control unit 76 executes a travel control of the vehicle 1 based on the travel state of the vehicle 1 such as the engine revolution number and the like and on the drive state by the driver obtained by the travel state obtaining unit 74. When the travel control of the vehicle 1 is executed, control amounts of the powers generated by the engine 10 and the motor 20, a transmission shift stage of the transmission 30, the engaging state of the clutch 24, and the like are calculated in response to the travel state and the like transmitted from the travel state obtaining unit 74. The travel control unit 76 transmits a control signal to the engine control unit 78, the motor control unit 80, the clutch control unit 82, and the transmission shift control unit 84 provided with the processing unit 72 of the ECU 70 based on the control amounts calculated by the calculation. The respective control units to which the control signal is transmitted from the travel control unit 76 control the respective devices in response to the transmitted control signals.

That is, the engine control unit 78 causes the engine 10 to generate a desired power by controlling respective sections of the engine 10 such as an opening degree of the throttle valve 18 and the like in response to the transmitted control signal. Further, the motor control unit 80 causes the motor 20 to generate a desired power by adjusting an electric power supplied by the motor 20 in response to the transmitted control signal. Further, the clutch control unit 82 executes a switch control of engagement and release of the clutch 24 by controlling an actuator for operating the clutch 24 in response to the transmitted control signal. Further, the transmission shift control unit 84 executes a transmission shift control of the transmission 30 in response to the transmitted control signal. The engine 10 and the motor 20 generate powers in response to the driving operation state of the driver and the travel state of the vehicle 1 by executing these controls, and the powers generated as described above are transmitted to the drive wheels 46 via the transmission 30 and the differential device 40, thereby generating a drive force in the drive wheels 46.

Further, the vehicle 1 is provided with the engine 10 and the motor 20 as the power sources, and the clutch 24 is interposed between the engine 10 and the motor 20. Accordingly, the travel control unit 76 generates a drive force only by the power generated by the motor 20 in response to the travel state and the driving operation state of the vehicle 1 and executes a control for causing the vehicle 1 to travel. As described above, when the vehicle 1 is caused to travel only by the power generated by the motor 20, the travel control unit 76 stops the engine 10 as well as releases the clutch 24. With the operation, no rotation torque is transmitted between the engine 10 and the motor 20. Further, since the motor 20 is disposed on a side nearer to the drive wheels 46 than the engine 10 in the power transmission passage, when a power is generated by the motor 20 in a state that the clutch 24 is released, the power generated by the motor 20 is transmitted only to the drive wheels 46 side without being transmitted to the engine 10. With the operation, the vehicle 1 travels only by the power generated by the motor 20.

Further, when the vehicle 1 travels, although a vehicle speed is adjusted by generating not only a drive force but also generating a brake force, when the brake force is generated to the vehicle 1, the driver operates the brake pedal 60. Specifically, although an operation force is input by applying a depression force to the brake pedal 60 and a brake force is generated by the brake device 50 by the operation force, when the operation force is input to the brake pedal 60, the brake force is generated by increasing the input operation force by the brake booster device 52.

For details, the brake booster device 52 is connected to the intake passage 16 by the negative pressure passage 54, and the brake booster device 52 increases the operation force when the brake pedal 60 is operated making use of a negative pressure generated in the intake passage 16 when the engine 10 is operated. Although the brake booster device 52 increases the operation force making use of the negative pressure as described above, the brake booster device 52 increases the operation force making use of the booster pressure that is the negative pressure which is stored in the negative pressure tank disposed to the negative pressure passage 54 as well as can be used by the brake booster device 52. The brake device 50 generates a brake force in response to the operation force increased by the brake booster device 52 as described above.

Here, although there is a case that the vehicle 1 stops the engine 10 and travels only by the power generated by the motor 20, in the case, the engine 10 generates no negative pressure. When the brake pedal 60 is operated, although the brake booster device 52 increases an operation force to the brake pedal 60 making use of the booster pressure stored in the negative pressure tank, the booster pressure is a negative pressure which is generated when the engine 10 is operated and stored. Accordingly, when a negative pressure is not generated by the engine 10 by stopping the engine 10, the booster pressure stored in the negative pressure tank is consumed each time the brake pedal 60 is operated and the booster pressure becomes high. As described above, when the booster pressure becomes high, it becomes difficult for the brake booster device 52, which increases an operation force to the brake pedal 60 making use of the booster pressure, to increase the operation force. Accordingly, when the booster pressure becomes high, the negative pressure generation control, which is a control for generating a negative pressure by operating the engine 10 by the power generated by the motor 20, is executed, thereby securing the booster pressure.

Note that the booster pressure used by the brake booster device 52 becomes a negative pressure to the atmospheric pressure, and an operation force of the brake pedal 60 is increased making use of a differential pressure of the pressure which becomes low to the atmospheric pressure. Accordingly, when the booster pressure is lower than a predetermined pressure, the brake booster device 52 can increase the operation force. Further, when the engine 10 generates no negative pressure, the booster pressure becomes high each time the brake pedal 60 is operated, and when the booster pressure becomes high, it becomes difficult for the brake booster device 52 to increase an operation force.

The negative pressure generation control is performed by the negative pressure generation control unit 86 in response to a result of a comparison of the booster pressure detected by the booster pressure sensor 56 with a predetermined determination value executed by the booster pressure determining unit 88 provided with the ECU 70. When the negative pressure generation control is executed by the negative pressure generation control unit 86, a control signal is transmitted to the negative pressure generation control unit 86 cause to transmit the control signal to the clutch control unit 82 so that the clutch 24 is engaged by controlling the engaging state of the clutch 24, and the power generated by the motor 20 is transmitted to the engine 10 to thereby operate the engine 10. With the operation, a negative pressure is generated by the engine 10, and the booster pressure which can be used by the brake booster device 52 is secured.

Further, when the negative pressure generation control is executed by the negative pressure generation control unit 86, a different timing, at which the negative pressure is generated by the engine 10, is set depending on the booster pressure detected by the booster pressure sensor 56. Specifically, when the booster pressure is relatively low at the time the negative pressure generation control is executed, a feeling-emphasizing control which emphasizes a feeling of the drive operation of the driver is executed, whereas when the booster pressure is relatively high at the time the negative pressure generation control is executed, a negative pressure generation-emphasizing control which emphasizes a negative pressure generation is executed. Among them, in the feeling-emphasizing control, a control for operating the engine 10 and generating a negative pressure is executed only when the brake pedal 60 is released, thereby securing a feeling when the brake pedal 60 is operated. Further, in the negative pressure generation-emphasizing control, the control for generating the negative pressure is executed not only when the brake pedal 60 is released but also while an operation for releasing the brake pedal 60 is being executed thereby generating a larger amount of the negative pressure by the engine 10 by increasing a chance for generating the negative pressure.

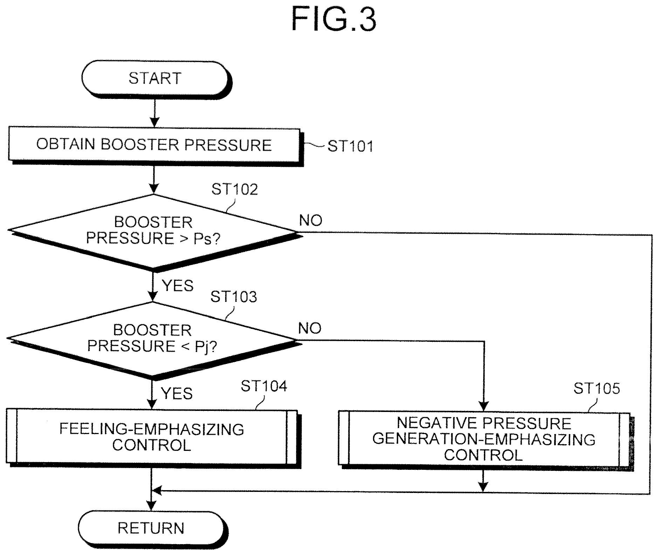

FIG. 3 is a flowchart illustrating an outline of a processing procedure of the negative pressure generation control. Next, the outline of the processing procedure of the negative pressure generation control in the hybrid vehicle according to the embodiment will be explained. Note that when respective sections are controlled at the time the vehicle 1 travels, the following process is called at each predetermined period and executed. When the negative pressure generation control is executed, first, the booster pressure is obtained (step ST101). The booster pressure is obtained by obtaining a result of detection of the booster pressure detected by the booster pressure sensor 56 by the travel state obtaining unit 74 provided with the ECU 70.

Next, whether or not the booster pressure obtained by the travel state obtaining unit 74 is larger than a control start determination value Ps is determined (step ST102). The determination is executed by the booster pressure determining unit 88. The control start determination value Ps, which is used when the determination is executed, is previously set as a first determination value, which is a predetermined determination value when a determination whether or not the negative pressure generation control is executed using the booster pressure, and is stored in the storage unit 96 of the ECU 70. The booster pressure determining unit 88 determines whether or not present booster pressure > the control start determination value Ps by comparing the control start determination value Ps stored in the storage unit 96 with the booster pressure obtained by the travel state obtaining unit 74. When it is determined by the determination that the booster pressure obtained by the travel state obtaining unit 74 is equal to or less than the control start determination value Ps (step ST102, determination No), the processing procedure is exited.

In contrast, when it is determined that booster pressure obtained by the travel state obtaining unit 74 > the control start determination value Ps (step ST102, determination Yes), next, the booster pressure determining unit 88 determines whether or not the booster pressure obtained by the travel state obtaining unit 74 is less than a control switch reference value Pj (step ST103). The control switch reference value Pj used in the determination is previously set as a reference value of the booster pressure when switching of the feeling-emphasizing control and the negative pressure generation-emphasizing control is executed based on the booster pressure at the time of negative pressure generation control and is stored in the storage unit 96 of the ECU 70. Specifically, the control switch reference value Pj is set as a second determination value that is a determination value higher than the control start determination value Ps. The booster pressure determining unit 88 determines whether or not present booster pressure < control switch reference value Pj by comparing the control switch reference value Pj stored in the storage unit 96 as described above with the booster pressure obtained by the travel state obtaining unit 74.
when it is determined by the determination that the booster pressure obtained by the travel state obtaining unit 74 is less than the control switch reference value Pj (step ST103, determination YES), the feeling-emphasizing control is executed (step ST104). In contrast, when it is determined that the booster pressure obtained by the travel state obtaining unit 74 is equal to or more than the control switch reference value Pj (step ST103, determination No), the negative pressure generation-emphasizing control is executed (step ST105).

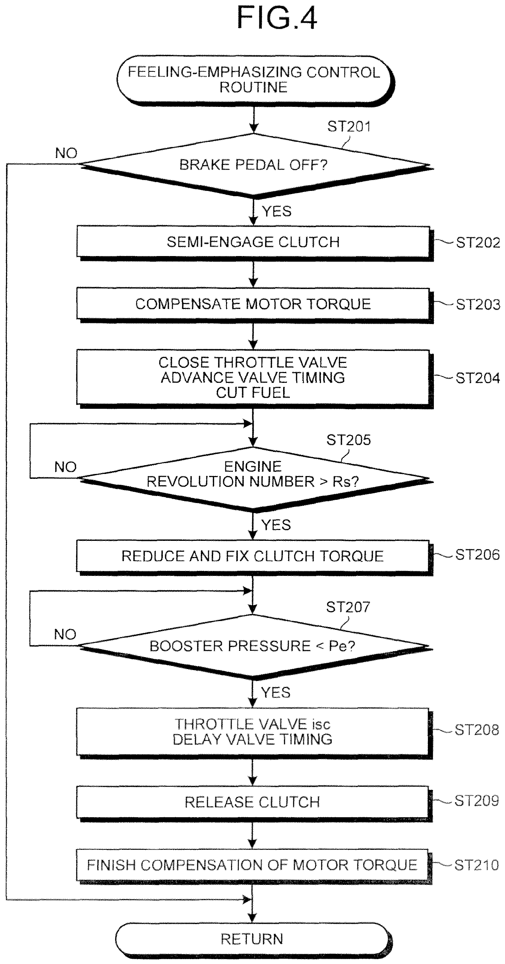

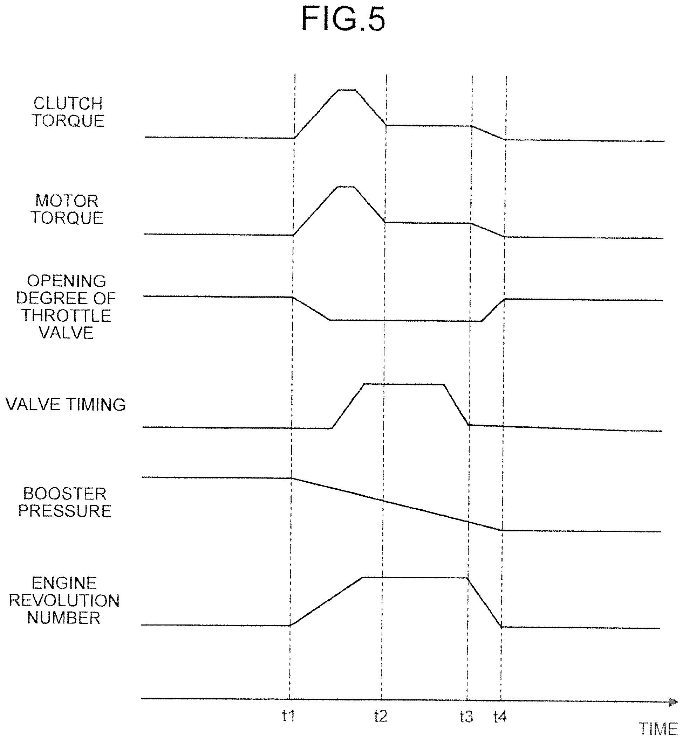

FIG. 4 is a flowchart illustrating a processing procedure of the feeling-emphasizing control routine. FIG. 5 is a time chart illustrating changes of respective control target sections when the negative pressure generation control is executed. When the negative pressure generation control is executed, although the feeling-emphasizing control and the negative pressure generation-emphasizing control are switched in response to the booster pressure obtained by the travel state obtaining unit 74 as described above, first, a processing procedure of the feeling-emphasizing control will be explained. When the feeling-emphasizing control is executed, first, whether or not the brake pedal 60 is OFF is determined (step ST201). The determination is executed by the drive operation determining unit 90 provided with the ECU 70. The brake pedal sensor 62 which can detect an operation amount of the brake pedal 60 is disposed in the vicinity of the brake pedal 60, and a result of the detection of the brake pedal sensor 62 can be obtained by the travel state obtaining unit 74.

The drive operation determining unit 90 determines whether or not the brake pedal 60 is OFF, that is, whether or not the brake pedal 60 is not subjected to a depression operation and is placed in a perfectly returned state is determined based on an operation amount of the brake pedal 60 obtained by the travel state obtaining unit 74 as described above. By the determination, when it is determined that the brake pedal 60 is not OFF (step ST201, determination No), the feeling-emphasizing control routine is exited and is returned to the original processing procedure.

In contrast, when it is determined by the determination in the drive operation determining unit 90 that the brake pedal 60 is OFF (step ST201, determination Yes), next, the clutch 24 is semi-engaged (step ST202). The control in the case is executed by the negative pressure generation control unit 86 provided with the ECU 70. That is, the clutch control unit 82 is caused to execute a control for semi-engaging the clutch 24 by transmitting a control signal from the negative pressure generation control unit 86 to the clutch control unit 82. Note that a control amount of the actuator of the clutch 24 when the clutch 24 is semi-engaged in the case is previously set as a control amount when the clutch 24 is semi-engaged at the time the negative pressure generation control is executed and stored in the storage unit 96 of the ECU 70.

In a state that a power is generated by the motor 20, a part of the power generated by the motor 20 is transmitted to the engine 10 via the clutch 24 in the semi-engaged state by semi-engaging the clutch 24 as described above. With the operation, the output shaft 12 of the engine 10 is rotated by rotation torque transmitted from the motor 20 and the engine 10 is operated (FIG. 5, t1).

Next, a compensation of motor torque which is the torque generated by the motor 20 is executed (step ST203). The compensation of the motor torque becomes a compensation of the motor torque when a part of the power generated by the motor 20 is transmitted to the engine 10 by semi-engaging the clutch 24 when the vehicle 1 travels only by the power generated by the motor 20 and a power transmitted to the drive wheels 46 side is reduced. The negative pressure generation control unit 86 reduces a variation of a drive force when the clutch 24 is semi-engaged by executing a control for compensating the motor torque.

When a compensation amount of the motor torque at the time the clutch 24 is semi-engaged is calculated, the compensation amount is calculated based on a transmission rate of the clutch torque transmitted by the semi-engaged clutch 24. Since the transmission rate of the clutch torque is determined by a friction coefficient µ between friction members provided with the clutch 24 and intervals between the friction members, that is, by an operation amount of the actuator, a torque transmitted to the clutch 24 is estimated to some extent by the operation amount. Further, when the transmission rate of the clutch torque is accurately calculated, the transmission rate of the clutch torque can be calculated with a high accuracy by learning a correction by a thermal expansion and the like and a wear of the clutch 24 and the like.

The negative pressure generation control unit 86 estimates a reduced amount of the motor torque transmitted to the drive wheels 46 side by that a part of the motor torque is transmitted to the engine 10 side when the clutch 24 is semi-engaged based on the transmission rate of the clutch torque calculated as described above, and calculates the reduced amount as the compensation amount of the motor torque. The negative pressure generation control unit 86 which has calculated the compensation amount of the motor torque transmits a control signal to the motor control unit 80 so that a power is generated by the motor 20 by adding the calculated compensation amount to the power. The motor control unit 80 compensates the motor torque by adding the compensation amount based on the control signal transmitted from the negative pressure generation control unit 86 (FIG. 5, t1).

Next, a fuel cut is executed by closing the throttle valve 18 of the engine 10 and advancing a valve timing (step ST204). These controls are executed by transmitting a signal as to the control of the engine 10 from the negative pressure generation control unit 86 to the engine control unit 78 when the negative pressure generation control is executed. The engine control unit 78 controls the throttle valve 18 so as to close the intake passage by controlling the engine 10 based on the control signal and further stops a fuel from a fuel injector (illustration omitted) (FIG. 5, t1). Further, opening/closing timings of the intake valve and the exhaust valve are advanced by a variable valve timing mechanism.

Note that the step of semi-engaging the clutch 24 (step ST202), the step of compensating the motor torque (step ST203), and the step of closing the throttle valve 18 and the like (step ST204) are executed simultaneously. In particular, the step of semi-engaging the clutch 24 and the step of compensating the motor torque are executed simultaneously as much as possible and the step of closing the throttle valve 18 and the like is executed simultaneously with the step of semi-engaging the clutch 24 and the like when possible.

Next, it is determined whether or not the engine revolution number is higher than a negative pressure generation possible rotation number Rs (step ST205). The determination is executed by the engine revolution number determining unit 92 based on a present engine revolution number obtained by the travel state obtaining unit 74 from a result of detection in the engine revolution number sensor 14. The negative pressure generation possible rotation number Rs used when the determination is executed is previously set as a somewhat low engine revolution number by which a negative pressure can be generated by the engine 10 when the engine 10 at rest is operated by the power of the motor 20 as well as the degree of which is such that engine noise and vibration do not become excessively large, and the negative pressure generation possible rotation number Rs is stored in the storage unit 96 of the ECU 70.

The engine revolution number determining unit 92 determines whether or not present engine revolution number > the negative pressure generation possible rotation number Rs by comparing the negative pressure generation possible rotation number Rs stored in the storage unit 96 as described above with the engine revolution number obtained by the travel state obtaining unit 74. When it is determined that the engine revolution number obtained by the travel state obtaining unit 74 is equal to or less than the negative pressure generation possible rotation number Rs by the determination (step ST205, determination No), the determination is executed again. Since the engine revolution number gradually increases by that the rotation torque from the motor 20 is transmitted to the engine 10 by the semi-engaged clutch 24, the engine revolution number determining unit 92 repeats the determination until the engine revolution number becomes higher than the negative pressure generation possible rotation number Rs.

In contrast, when it is determined that engine revolution number obtained by the travel state obtaining unit 74 > the negative pressure generation possible rotation number Rs (step ST205, determination Yes), next, the clutch torque is reduced and fixed (step ST206). The clutch torque is reduced by transmitting a control signal from the negative pressure generation control unit 86 to the clutch control unit 82 and controlling the clutch 24 by the clutch control unit 82. With the operation, an offset of an engaging direction of the clutch 24 is fixed in a state that the torque which can be transmitted by the semi-engaged clutch 24 is reduced. In the case, the clutch 24 is kept in a sliding state (FIG. 5, t2).

Next, the booster pressure determining unit 88 determines whether or not the booster pressure is less than a control finish determination value Pe (step ST207). The control finish determination value Pe used in the determination is previously set as a determination value when a determination whether or not the present booster pressure becomes a magnitude for effectively increasing an operation force when the brake pedal 60 is operated by the brake booster device 52 making use of the booster pressure is executed and is stored in the storage unit 96 of the ECU 70.

The booster pressure determining unit 88 determines whether or not present booster pressure < the control finish determination value Pe by comparing the control finish determination value Pe stored in the storage unit 96 as described above with booster pressure obtained by the travel state obtaining unit 74. When it is determined by the determination that the booster pressure obtained by the travel state obtaining unit 74 is equal to or more than the control finish determination value Pe (step ST207, determination No), the determination is executed again. Since the booster pressure gradually increases by operating the engine 10, the booster pressure determining unit 88 repeats the determination until the booster pressure becomes lower than the control finish determination value Pe. Note that the control finish determination value Pe used in the determination is set in a relation of the control finish determination value Pe < the control start determination value Ps to suppress hunting at the time of control.

In contrast, when it is determined that booster pressure obtained by the travel state obtaining unit 74 < the control finish determination value Pe (step ST207, determination Yes), the throttle valve 18 is set to an opening degree of isc (idle speed control) and the valve timing is delayed (step ST208). That is, the opening degree of throttle valve 18 is set to an opening degree when the engine 10 is idled by transmitting a control signal from the negative pressure generation control unit 86 to the engine control unit 78. Further, the opening/closing timings of the intake valve and the exhaust valve are delayed from the state that the opening/closing timings are advanced by controlling the variable valve timing mechanism and set to valve timings when the engine 10 is idled.

Next, the clutch 24 is released (step ST209). In the control, the clutch 24 is released by operating the actuator of the clutch 24 by transmitting a control signal from the negative pressure generation control unit 86 to the clutch control unit 82 (FIG. 5, t3). In the engine 10 in which the clutch 24 is semi-engaged and which is operated by the rotation torque transmitted from the motor 20, the engine 10 stops because transmission of the rotation torque from the motor 20 is shut off by releasing the clutch 24 as described above.

Next, the compensation of the motor torque is finished (step ST210). That is, since the transmission of the rotation torque from the motor 20 to the engine 10 is shut off by releasing the clutch 24, the negative pressure generation control unit 86 transmits a control signal for finishing the addition of the motor torque to the motor control unit 80. With the operation, in the motor 20, the torque by which the engine 10 is operated via the clutch 24 is reduced (FIG. 5, t4).

By executing these controls, when the booster pressure is secured and the engaging state of the clutch 24 and the operation state of the motor 20 are returned to an ordinary operation state when the vehicle 1 travels only by the power generated by the motor 20, the routine returns to an original control procedure.

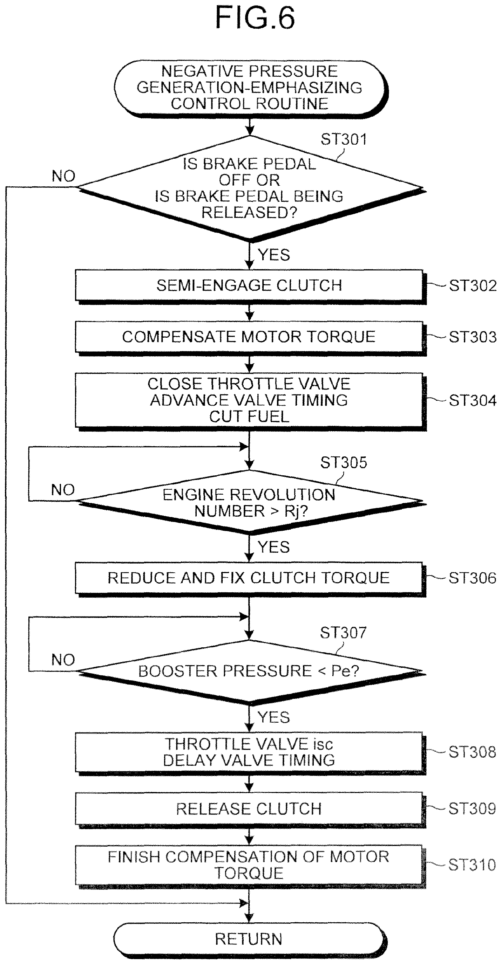

FIG. 6 is a flowchart illustrating a processing procedure of the negative pressure generation-emphasizing control routine. When the feeling-emphasizing control is executed while the vehicle 1 travels only by the power generated by the motor 20, the booster pressure is secured by operating the engine 10 by the power generated by the motor 20 when the brake pedal 60 is OFF. In also the negative pressure generation-emphasizing control, although the booster pressure is secured by operating the engine 10 using the power generated by the motor 20 likewise the feeling-emphasizing control, in the negative pressure generation-emphasizing control, a timing at which a negative pressure is generated by the engine 10 and an engine revolution number when the negative pressure is generated are different.

To explain a processing procedure of the negative pressure generation-emphasizing control, when the negative pressure generation-emphasizing control is executed, first, it is determined by the drive operation determining unit 90 whether or not the brake pedal 60 is OFF or the brake pedal 60 is being released (step ST301). That is, in the feeling-emphasizing control, although only whether or not the brake pedal 60 is depressed is determined (step ST201), in the negative pressure generation-emphasizing control, a determination is executed including not only whether or not the brake pedal 60 is depressed but also whether or not the brake pedal 60 in the depressed state is placed in a returned state.

When the determination is executed by the drive operation determining unit 90, the determination is executed based on the operation amount of the brake pedal 60 obtained by the travel state obtaining unit 74 likewise when the feeling-emphasizing control is executed. By the determination, when it is determined that the brake pedal 60 is neither OFF nor is being released (step ST301, determination No), the negative pressure generation-emphasizing control routine is exited and returned to the original processing procedure.

In contrast, by the determination in the drive operation determining unit 90, when it is determined that the brake pedal 60 is OFF or is being released (step ST301, determination Yes), next, the clutch 24 is semi-engaged by that the negative pressure generation control unit 86 causes the clutch control unit 82 to execute a control of the clutch 24 (step ST302). With the operation, the output shaft 12 of the engine 10 is rotated by the rotation torque transmitted from the motor 20, thereby operating the engine 10.

Next, compensation of the motor torque is executed by that the negative pressure generation control unit 86 causes the motor control unit 80 to execute the control for adding the motor torque (step ST303). Next, the negative pressure generation control unit 86 causes the engine control unit 78 to control the respective sections of the engine 10, thereby closing the throttle valve 18, advancing the valve timing, and executing the fuel cut (step ST304).

Next, the engine revolution number determining unit 92 determines whether or not the engine revolution number is higher than a negative pressure generation-emphasizing rotation number Rj (step ST305). The negative pressure generation-emphasizing rotation number Rj used when the determination is executed is previously set as an engine revolution number which can generate a negative pressure earlier than the negative pressure generation possible rotation number Rs and is stored in the storage unit 96 of the ECU 70. That is, since the engine 10 can easily generate a negative pressure when a revolution number is higher, a relation between the negative pressure generation-emphasizing rotation number Rj and the negative pressure generation possible rotation number Rs is set to the negative pressure generation-emphasizing rotation number Rj > the negative pressure generation possible rotation number Rs.

The engine revolution number determining unit 92 determines whether or not present engine revolution number > the negative pressure generation-emphasizing rotation number Rj by comparing the negative pressure generation-emphasizing rotation number Rj stored in the storage unit 96 as described above with the engine revolution number obtained by the travel state obtaining unit 74. When it is determined by the determination that the engine revolution number is equal to or less than the negative pressure generation-emphasizing rotation number Rj (step ST305, determination No), the determination is executed again. The engine revolution number determining unit 92 repeats the determination until the engine revolution number becomes higher than the negative pressure generation-emphasizing rotation number Rj.

In contrast, when it is determined that engine revolution number obtained by the travel state obtaining unit 74 > the negative pressure generation-emphasizing rotation number Rj (step ST305, determination Yes), next, the clutch torque is reduced and fixed by that the negative pressure generation control unit 86 causes the clutch control unit 82 to control the clutch 24 (step ST306). With the operation, the clutch 24 is kept in the sliding state.

Next, the booster pressure determining unit 88 determines whether or not the booster pressure obtained by the travel state obtaining unit 74 is less than the control finish determination value Pe stored in the storage unit 96 (step ST307). When it is determined by the determination, that the booster pressure is equal to more than the control finish determination value Pe (step ST307, determination No), the determination is executed again. The booster pressure determining unit 88 repeats the determination until the booster pressure becomes lower than the control finish determination value Pe.

In contrast, when it is determined that booster pressure < the control finish determination value Pe (step ST307, determination Yes), the negative pressure generation control unit 86 causes the engine control unit 78 to control the respective sections of the engine 10, thereby setting the throttle valve 18 to the opening degree of isc and delaying the valve timing (step ST308).

Next, the clutch 24 is released by that the negative pressure generation control unit 86 causes the clutch control unit 82 to execute the control of the clutch 24 (step ST309). With the operation, since the transmission of the rotation torque from the motor 20 to the engine 10 is shut off, the engine 10 stops. Next, the compensation of the motor torque is finished by that the negative pressure generation control unit 86 causes the motor control unit 80 to execute a control for finishing the addition of the motor torque (step ST310). With the operation, in the motor 20, the torque by which the engine 10 is operated via the clutch 24 is reduced.

By executing these controls, when the booster pressure is secured and the engaging state of the clutch 24 and the operation state of the motor 20 are returned to an ordinary operation state when the vehicle 1 travels only by the power generated by the motor 20, the routine returns to an original control procedure.

When the booster pressure is higher than the control start determination value Ps at the time the hybrid vehicle travels only by the power generated by the motor 20, the hybrid vehicle executes the negative pressure generation control and secures a brake performance by generating a negative pressure by operating the engine 10 by the power generated by the motor 20. Accordingly, even when a negative pressure is generated by the engine 10 at the time the booster pressure is high, since the negative pressure is generated by operating the engine 10 by the power of the motor 20 for travelling, the negative pressure can be generated without consuming a fuel by the engine 10. Further, when the engine 10 is operated to generate a negative pressure, since the engine 10 is operated by the power of the motor 20 for travelling without using a starter (illustration omitted) of the engine 10, a discomfort as that when the engine 10 is started by the starter while the vehicle 1 travels can be suppressed.

Further, in the negative pressure generation control, when the booster pressure is lower than the control switch reference value Pj, the engine 10 is operated only when the brake pedal 60 is OFF. Accordingly, since the negative pressure is generated in a state that the brake pedal 60 is not depressed, when the booster pressure is secured, a change of the booster pressure can be suppressed from being transmitted to the driver so that the discomfort can be suppressed. Further, in the negative pressure generation control, when booster pressure is equal to or more than the control switch reference value Pj, the engine 10 is operated when the brake pedal 60 is OFF and when the brake pedal 60 is being released. Accordingly, when the booster pressure is high and it is necessary to promptly generate a negative pressure, since the negative pressure is generated not only when the brake pedal 60 is OFF but also when the brake pedal 60 is being released, the booster pressure can be secured faster than when the negative pressure is generated only when the brake pedal 60 is OFF so that the brake performance can be secured. As a result of the operations, the fuel consumption performance and the brake performance can be secured without causing the driver to feel the discomfort.

Further, since the negative pressure generation possible rotation number Rs is set as a somewhat low engine revolution number of a degree by which engine noise and vibration do not become excessively large, and, in the feeling-emphasizing control, the clutch torque is reduced when the engine revolution number becomes higher than the negative pressure generation possible rotation number Rs, a negative pressure can be generated while keeping the somewhat low engine revolution number. With the operation, it can be suppressed that the engine revolution number becomes excessively high when the vehicle 1 travels only by the power generated by the motor 20 so that an increase of operation noise the engine 10 can be suppressed. As a result, the discomfort of the driver can be more reliably suppressed.

Further, the clutch 24 is disposed in the power transmission passage between the engine 10 and the drive wheels 46, and when the vehicle 1 is caused to travel only by the power generated by the motor 20, the engine 10 is stopped as well as the clutch 24 is released. With the operation, when the vehicle 1 travels only by the power of the motor 20, it can be suppressed that friction is generated by operating the engine 10 which generates no power so that an electric power consumption amount used by the motor 20 can be suppressed. Further, when the engine 10 is operated at the time the negative pressure generation control is executed, since the power generated by the motor 20 is transmitted to the engine 10 by engaging the clutch 24, the engine 10 can be easily operated by the power generated by the motor 20 when the negative pressure generation control is executed. As a result of the operations, the brake performance can be easily secured while suppressing power consumption.

Further, the motor 20 is disposed to the side nearer to the drive wheels 46 than the engine 10, and the clutch 24 is interposed between the motor 20 and the engine 10. Accordingly, when the vehicle 1 travels only by the power of the motor 20, it can be more reliably as well as easily suppressed by releasing the clutch 24 that the power generated by the motor 20 is consumed by the friction of the engine 10 so that the electric power consumption amount can be suppressed. Further, when the engine 10 is operated by the power of the motor 20, the engine 10 can be more reliably as well as easily operated by engaging the clutch 24 so that the brake performance can be secured. As a result, the brake performance can be more reliably as well as easily secured while suppressing the power consumption.

Further, when the engine 10 is operated by the power generated by the motor 20 at the time the negative pressure generation control is executed, to execute the compensation of the motor torque, it can be suppressed that a drive force is varied because a part of the motor torque is used to operate the engine 10. As a result, the brake performance can be more reliably secured while suppressing that the driver feels the discomfort.

Further, since the vehicle 1 according to the embodiment is disposed with the brake booster device 52, which is often used in the conventional vehicles, even when the operation force of the driver is increased by the brake booster device 52 at the time the vehicle 1 travels only by the power of the motor 20, the booster pressure used by the brake booster device 52 is secured by operating the engine 10 by the power of the motor 20. As a result, the brake performance can be secured while reducing a manufacturing cost.

Note that the engine 10 described above is provided with a variable timing mechanism, and although the valve timing is adjusted also by variable timing mechanism when the negative pressure generation control is executed, in a case of an engine 10 which is not provided with the variable timing mechanism, the valve timing may not be adjusted. Even if the valve timing is not adjusted, a negative pressure can be generated by operating the engine 10 by the power generated by the motor 20.

### Reference Signs List

- 1: VEHICLE
- 10: ENGINE
- 14: ENGINE REVOLUTION NUMBER SENSOR
- 20: MOTOR
- 24: CLUTCH
- 30: TRANSMISSION
- 40: DIFFERENTIAL DEVICE
- 46: DRIVE WHEEL
- 50: BRAKE DEVICE
- 52: BRAKE BOOSTER DEVICE
- 56: BOOSTER PRESSURE SENSOR
- 60: BRAKE PEDAL
- 62: BRAKE PEDAL SENSOR
- 70: ECU
- 74: TRAVEL STATE OBTAINING UNIT
- 76: TRAVEL CONTROL UNIT
- 78: ENGINE CONTROL UNIT
- 80: MOTOR CONTROL UNIT
- 82: CLUTCH CONTROL UNIT
- 84: TRANSMISSION SHIFT CONTROL UNIT
- 86: NEGATIVE PRESSURE GENERATION CONTROL UNIT
- 88: BOOSTER PRESSURE DETERMINING UNIT
- 90: DRIVE OPERATION DETERMINING UNIT
- 92: ENGINE REVOLUTION NUMBER DETERMINING UNIT

## Claims

1. A hybrid vehicle (1) comprising:
an internal combustion engine (10) and a motor (20) which are power sources when the vehicle (1) travels; and
a brake booster device (52) that increases an operation force when a brake pedal (60) is operated making use of a negative pressure generated when the internal combustion engine (10) is operated, **characterized in that**:
when a booster pressure which is the negative pressure used by the brake booster device (52) is higher than a first determination value which is a predetermined determination value while the vehicle (1) travels only by a power generated by the motor (20), a negative pressure generation control which is a control for generating the negative pressure is executed by operating the internal combustion engine (10) by the power generated by the motor (20), **characterised in that**
when the negative pressure generation control is executed, when the booster pressure is lower than a second determination value which is a determination value higher than the first determination value, the internal combustion engine (10) is operated only when the brake pedal (60) is not depressed, and when the booster pressure is equal to or higher than the second determination value, the internal combustion engine (10) is operated when the brake pedal (60) is not depressed and when the brake pedal (60) in the depressed state is returned.

2. The hybrid vehicle (1) according to claim 1, wherein a clutch (24), which can switch transmission and shut-off of a rotation torque between the internal combustion engine (10) and drive wheels of the vehicle (1) by switching engagement and release, is disposed in a power transmission passage between the drive wheels and the internal combustion engine (10),
when the vehicle (1) is caused to travel only by a power generated by the motor (20), the internal combustion engine (10) is stopped as well as the clutch (24) is released, and
when the internal combustion engine (10) is operated when the negative pressure generation control is executed, a power generated by the motor (20) is transmitted to the internal combustion engine (10) by engaging the clutch (24).

3. The hybrid vehicle (1) according to claim 2, wherein the motor (20) is disposed on a side nearer to the drive wheels side in the power transmission passage than the internal combustion engine (10), and the clutch (24) is interposed between the motor (20) and the internal combustion engine (10) and disposed so as to be able to switch transmission and shut-off of a rotation torque between the motor (20) and the internal combustion engine (10).

4. The hybrid vehicle (1) according to any one of claims 1 to 3, wherein when the internal combustion engine (10) is operated by the power generated by the motor (20) when the negative pressure generation control is executed, the power generated by the motor (20) is compensated.

## Patentansprüche

1. Hybridfahrzeug (1), umfassend:
einen Verbrennungsmotor (10) und einen Elektromotor, welche Energiequellen sind, wenn das Fahrzeug (1) fährt, und
eine Bremskraftverstärkervorrichtung (52), die eine Betätigungskraft verstärkt, wenn ein Bremspedal (60) betätigt wird, wobei ein Unterdruck genutzt wird, der erzeugt wird, wenn der Verbrennungsmotor (10) betrieben wird, **dadurch gekennzeichnet, dass**:
wenn ein Verstärkerdruck, bei dem es sich um den Unterdruck handelt, der von der Bremskraftverstärkervorrichtung (52) verwendet wird, höher als ein erster Bestimmungswert ist, bei dem es sich um einen vorbestimmten Bestimmungswert handelt, während das Fahrzeug (1) nur mit einer durch den Elektromotor (20) erzeugten Energie fährt, eine Unterdruckerzeugungssteuerung, bei der es sich um eine Steuerung zum Erzeugen des Unterdrucks handelt, durch Betreiben des Verbrennungsmotors (10) durch die vom Elektromotor (20) erzeugte Energie ausgeführt wird, **dadurch gekennzeichnet, dass**
wenn die Unterdruckerzeugungssteuerung ausgeführt wird, wenn der Verstärkerdruck niedriger als ein zweiter Bestimmungswert ist, bei dem es sich um einen Bestimmungswert handelt, der höher als der erste Bestimmungswert ist, der Verbrennungsmotor (10) nur betrieben wird, wenn das Bremspedal (60) nicht heruntergedrückt wird, und wenn der Verstärkerdruck gleich oder höher als der zweite Bestimmungswert ist, der Verbrennungsmotor (10) betrieben wird, wenn das Bremspedal (60) nicht heruntergedrückt wird, und wenn das Bremspedal (60) aus dem heruntergedrückten Zustand wieder zurückkommt.

2. Hybridfahrzeug (1) nach Anspruch 1, wobei eine Kupplung (24), die ein Getriebe schalten und ein Drehmoment zwischen dem Verbrennungsmotor (10) und Antriebsrädern des Fahrzeugs (1) durch Umschalten von Einrücken und Ausrücken abschalten kann, in einem Energieübertragungsdurchgang zwischen den Antriebsrädern und dem Verbrennungsmotor (10) angeordnet ist,
wenn das Fahrzeug (1) veranlasst wird, nur mit einer vom Elektromotor (20) erzeugten Energie zu fahren, der Verbrennungsmotor (10) gestoppt sowie die Kupplung (24) ausgerückt werden, und
wenn der Verbrennungsmotor (10) betrieben wird, wenn die Unterdruckerzeugungssteuerung ausgeführt wird, eine vom Elektromotor (20) erzeugte Energie auf den Verbrennungsmotor (10) durch Einrücken der Kupplung (24) übertragen wird.

3. Hybridfahrzeug (1) nach Anspruch 2, wobei der Elektromotor (20) in dem Energieübertragungsdurchgang an einer Seite näher an der Antriebsräderseite als der Verbrennungsmotor (10) angeordnet ist und die Kupplung (24) zwischen dem Elektromotor (20) und dem Verbrennungsmotor (10) eingefügt und so angeordnet ist, dass sie eine Übertragung schalten und ein Drehmoment zwischen dem Elektromotor (20) und dem Verbrennungsmotor (10) abschalten kann.

4. Hybridfahrzeug (1) nach einem der Ansprüche 1 bis 3, wobei, wenn der Verbrennungsmotor (10) durch die vom Elektromotor (20) erzeugte Energie betrieben wird, wenn die Unterdruckerzeugungssteuerung ausgeführt wird, die vom Elektromotor (20) erzeugte Energie kompensiert wird.

## Revendications

1. Véhicule hybride (1) comportant :
un moteur à combustion interne (10) et un moteur (20) qui sont des sources d'énergie quand le véhicule (1) se déplace ; et
un dispositif amplificateur de freinage (52) qui augmente une force d'actionnement quand une pédale de frein (60) est actionnée en se servant d'une dépression générée quand le moteur à combustion interne (10) est en fonctionnement, **caractérisé en ce que** :
quand une pression d'amplificateur qui est la dépression utilisée par le dispositif amplificateur de freinage (52) est plus élevée qu'une première valeur de détermination qui est une valeur de détermination prédéterminée alors que le véhicule (1) se déplace seulement grâce à de l'énergie générée par le moteur (20), une commande de génération de dépression qui est une commande destinée à générer la dépression est exécutée en faisant fonctionner le moteur à combustion interne (10) grâce à l'énergie générée par le moteur (20), **caractérisé en ce que**
quand la commande de génération de dépression est exécutée, quand la pression d'amplificateur est inférieure à une deuxième valeur de détermination qui est une valeur de détermination plus élevée que la première valeur de détermination, le moteur à combustion interne (10) est mis en fonctionnement seulement quand la pédale de frein (60) n'est pas enfoncée, et quand la pression d'amplificateur est égale à ou supérieure à la deuxième valeur de détermination, le moteur à combustion interne (10) est mis en fonctionnement quand la pédale de frein (60) n'est pas enfoncée et quand la pédale de frein (60) dans l'état enfoncé revient.

2. Véhicule hybride (1) selon la revendication 1, dans lequel un embrayage (24), qui peut commuter une transmission et une interruption d'un couple de rotation entre le moteur à combustion interne (10) et des roues motrices du véhicule (1) en commutant un engagement et un relâchement, est disposé dans un passage de transmission de puissance entre les roues motrices et le moteur à combustion interne (10),
quand le véhicule (1) est amené à se déplacer seulement grâce à une énergie générée par le moteur (20), le moteur à combustion interne (10) est arrêté tout comme l'embrayage (24) est relâché, et
quand le moteur à combustion interne (10) est mis en fonctionnement quand la commande de génération de dépression est exécutée, une énergie générée par le moteur (20) est transmise au moteur à combustion interne (10) en engageant l'embrayage (24).

3. Véhicule hybride (1) selon la revendication 2, dans lequel le moteur (20) est disposé sur un côté plus près du côté des roues motrices dans le passage de transmission de puissance que le moteur à combustion interne (10), et l'embrayage (24) est interposé entre le moteur (20) et le moteur à combustion interne (10) et disposé de façon à être capable de commuter une transmission et une interruption d'un couple de rotation entre le moteur (20) et le moteur à combustion interne (10).

4. Véhicule hybride (1) selon l'une quelconque des revendications 1 à 3, dans lequel, quand le moteur à combustion interne (10) est mis en fonctionnement grâce à l'énergie générée par le moteur (20) quand la commande de génération de dépression est exécutée, l'énergie générée par le moteur (20) est compensée.
